# EUROPEAN PATENT SPECIFICATION

(11) **EP 3 592 652 B1**
(45) Date of publication and mention of the grant of the patent: **07.10.2026**
(21) Application number: 18712465.6
(22) Date of filing: 28.02.2018
(51) Int. Cl.: B65D 13/02, B28B 1/00, C12G 1/00, C12H 1/22, B65D 39/08, B65D 47/06

(54) **BARREL**
FASS
FÛT

(30) Priority: 09.03.2017 IT 201700025981
(43) Date of publication of application: 15.01.2020
(73) Proprietor: Clayver S.r.l., 17047 Quiliano (SV) (IT)
(72) Inventor: GASCO, Maurizio, 17011 Albisola (SV) (IT); RISSO, Luca, 16155 Genova (IT)
(74) Representative: Karaghiosoff, Giorgio Alessandro
(86) International application number: PCT/IB2018/051272
(87) International publication number: WO 2018/163026

(56) References cited:
- WO-A1-2007/111380
- WO-A2-2007/024987
- WO-A2-2011/053405
- CN-U- 203 211 614
- CN-U- 203 294 474
- CN-Y- 2 897 831
- DE-A1- 2 058 734
- DE-C- 64 038
- GB-A- 2 135 627
- NL-A- 7 812 594
- US-A- 2 043 183
- US-A- 221 827
- US-A- 578 232
- US-A1- 2012 088 018
- THEMAS VIN: "Fabrication d'une cuve Clayver | La fabrication de la cuve #Clayver | By Themas Vin | Facebook", 26 November 2016 (2016-11-26), XP055956060, Retrieved from the Internet <URL:https://www.facebook.com/themas.vin/videos/1805006846434453/?t=33>
- ANONYMOUS: "Facebook", 5 January 2017 (2017-01-05), pages 1 - 1, XP055956189, Retrieved from the Internet <URL:https://www.facebook.com/photo/?fbid=1849566088661962&set=a.1404161419869100> [retrieved on 20220830]
- CLAYVER: "Clayver CUVES EN CÉRAMIQUE", 30 July 2016 (2016-07-30), pages 1 - 8, XP055956215, Retrieved from the Internet <URL:https://www.themas-vin.com/contenu/uploads/2016/07/Clayver-brochure-eng_fra.pdf> [retrieved on 20220830]

## Description

The present invention relates to the field of the containers for storing, preserving and/or treating food liquids such as in particular the alcoholic beverages such as beverages obtained by fermentation, distilled beverages, liquors or the like.

The present invention relates to a barrel in particular for alcoholic beverages and especially for fermentation and/or vinification processes, which barrel has a horizontal central longitudinal axis which intersects a front wall and a back wall and a mantle wall closing on itself and extending around said axis, which barrel is made of ceramic, and consists of two semi-spherical end sectors which two sectors are opposing to each other, with the open sides facing to each other and which two semi-spherical end sectors are connected by an intermediate joining sector and connected as a single piece to the two end sectors.

Currently alcoholic beverages such as wine but also other strong drinks are preserved in containers made by various materials ranging from the classical wooden barrels, to the concrete barrels, to the containers made of plastics and the containers made of stainless steel .

All of these types of containers have influence in the production process.

Among the materials known for the preservation in particular in the oenological field, the most ancient material used for oenological purposes is indeed the terracotta, a material that has remained substantially identical for millennia. The first amphorae where most likely was kept wine have been found in Iran in Hajji Firuz and they would even go back to the 5100 b.C. The traditional Georgian technique is still at present linked to the use of big terracotta amphorae called Qvevri , with a capacity of 2000-3000 liters. The raw material is the collected and possibly refined clay, which is lightly sifted in order to remove the impurities or coarser mineral components. The clay is a fine sediment predominantly made of phyllosilicates i.e. minerals composed of alternating layers of silicon oxide and aluminum hydroxide according to ordered lattices. These layers can incorporate a lot of water thus expanding and acquiring the capability to slide on each other. In this way the clay becomes plastic and deformable and can be shaped by skilled artisans to produce vessels also having very big size that reach the final consistency and solidity only after drying and firing in a furnace at temperatures in the order of 1000 °C. Therefore, it is a material relatively easy to be produced, cheap, ancient and, thus familiar to humans and also very durable if carefully manipulated. The terracotta has always been used for making food vessels, but besides the mentioned it also has two important drawbacks: the possible presence of contaminants and an intrinsic porosity.

The matter of the contaminants relates both to possible toxic contaminants, which can be remedied by going to selected and analytically controlled raw materials, and contaminants that are harmless to health but detrimental for the quality of the beverage. For example, think of iron which gives the terracotta its classic orange color, but can cause problems of "casse" or catalytic oxidation of the wine.

The problem of the porosity is instead linked to the possible loss of content by transpiration through the wall of the container and, mostly, to the risk of oxidation and increase of volatiles in the wine or also in other alcoholic beverages. In fact, the passage of oxygen through the wall, for example, of an amphora is not mediated, as it happens in the case of wooden containers, mostly if they are small and new, by the release of polyphenolic substances able to bond to it, but is direct and substantially constant in time.

The problem of the porosity of the containers made of terracotta is very significant, in particular for the biggest containers. For example, think that a Georgian amphora, if it is filled with water or wine, is able to be rapidly emptied by percolation of the liquid through the wall. In fact, the traditional Georgian technique is not providing particular technologies for refining the starting earth and, thus, reducing the porosity of the material; furthermore, these containers are so big that they cannot be fired in too sophisticated furnaces and all of this translates into a material having a rather coarse and heterogeneous structure and into poor mechanical resistance.

In the past a solution consisted in making the interior of large amphorae and jars impermeable by using beeswax, a not-toxic natural element. However this is not the optimal solution as not only it involves not easy maintenance and cleaning of the vessel, but mostly affects the quality of the wine or however of the alcoholic beverage contained therein, since the beeswax has flavors that can be transferred to the wine or alcoholic liquid because of its slight solubility in alcohol .

The same result can be obtained by painting the interior of the container with resins as it happens for proofing the concrete barrels or else by glass glazing.

The proofing processes, although effective, in addition to be expensive have the drawback of requiring an integral repetition of the treatment even in case of local damages having small entity such to perforate the protective barrier.

For this reason, the use of non-proofed terracotta vessels is progressively spreading. In this case they are terracotta of Spanish or Tuscan origin, having more refined structure and, in general, size smaller than Georgian ones. In these containers the porosity is lower and allows the wine or other alcoholic beverage to be contained with a reduced percolation/evaporation effect. These containers are mainly to be used in the first steps of the vinification, when the high concentration of polyphenolic and saline substances in the must can balance the diffusion of oxygen and also determine precipitations inside the porous structure further reducing the permeability.

Another way currently used consists in burying the biggest amphorae in cellars with the purpose of promoting thermal insulation and, in some way, also protecting the beverage such as wine from the oxidation, trying to make carbon dioxide stagnate on the bottom since it is a gas heavier than oxygen. This solution is obviously little practicable for most of the cellars.

However, the more used solution by far is to abandon the use of terracotta in favor of other materials, such as stainless steel being, at present, the most used material for making winemakers , vats and "semprepieni" of any size or for making containers for alcoholic beverages, such as beverages obtained by fermentation, distilled beverages, liquors or the like. For reasons not perfectly understood and probably due to the characteristics of electrical conductivity of any metal, also the use of steel begins, however, to be questioned. In fact, some producers complain about a certain tendency of the vessels made of steel to lead the wine and beer to a not appreciated reduction status.

In particular, the gaseous exchanges between the product and the environment during the refinement step of the vinification process are of fundamental importance.

The dosed oxygenation acts on the phenol compounds of the wine, easing two fundamental reactions for the refinement of wine, such as the condensation between tannins and anthocyanins and the polymerization of the tannins. The first phenomenon allows lasting stabilization of the coloring matters, hence they are protected from the natural degradation. The combination created among the single tannins leads to the formation of polymers with different, higher molecular weight, thus leading the wines to loose part of their astringency and to prove to be softer and rounder on the palate.

Currently a natural exchange between product and environment, which allows a controlled passage of the oxygen inside the vessel and the gases generated by the wine inside the barrel, is obtained by using wooden barrels, thanks to the natural porosity of the wood itself. However, the wood is not an inert material and thus unrelated to the refinement process but it is subjected to a phenomenon leading to the dissolution of the substance contained in the wood inside the wine: for example, oak wood which many barrels are made of is rich in two polyphenols, such as lignins and tannins. The lignins are polymers insoluble in water, which have polyphenolic nature and, from their degradation, precursors of many flavoring substances found in the aromas of the wines are originated, mostly if they are refined in small barrels made of toasted woods. Therefore, by using wooden barrels, the refinement step of the product also involves a substantial modification of the organoleptic characteristics of the wine and that is not always a wanted effect, therefore currently it is not possible to separate the refinement step from the dissolution step of the flavoring substances of the wood used for the barrels.

All the known containers made of materials involving the walls to be proofed, i.e. a suppression of the gaseous exchange between environment and product in the container, are not suitable to refinement processes.

Document CN203211614 discloses a multifunctional ceramic barrel-shaped tea caddy and relates to the technical field of tea caddies. The multifunctional ceramic barrel-shaped tea caddy consists of a ceramic caddy body, ceramic handle supports, a ceramic handle, a ceramic caddy cover and tin foil paper. The ceramic handle supports are arranged at two ends of the upper portion of the ceramic caddy body respectively, two ends of the ceramic handle are fixed at the upper ends of the ceramic handle supports respectively, the ceramic caddy cover is arranged on the ceramic caddy body, and the tin foil paper and gelatin sponge are wrapped on the lower surface of the ceramic caddy cover. The multifunctional ceramic barrel-shaped tea caddy is simple in structure, convenient to use, attractive and novel in appearance, has good sealing performance, effectively prevents damp, can keep taste of tea leaves to be delicious and lasting, can store various tea leaves, meanwhile can be used for storing wine, candies and the like and has the paragon of collection, layout and archaizing.

Document US2012088018 discloses a method of making a wood insert from a dismantled stave of a barrel, such as a used bourbon barrel. The method comprises the steps of conditioning the exterior surface of a dismantled stave; and profiling the conditioned stave to increase its aging surface area. The profiled stave can then be heat treated (e.g., toasted and/or charred) to create the wood insert. The insert can be used to integrate a wood flavoring during the aging of an alcoholic beverage, such as a non-bourbon whiskey.

DE2058734A discloses a method for manufacturing ceramic hollow bodies in which at least two parts, particularly the upper and lower portions, are formed using identical molds. The parts are mechanically produced, then dried, glazed, assembled, and fired, whereby the glaze bonds them into a tight unit. Open or closed hollow bodies can be obtained by selectively removing or retaining base sections, enabling simplified, cost-efficient production with standardized components.

DE64038C discloses a method for producing ceramic beer barrels in which a separately formed lid is placed on an internal shoulder of the vessel wall and the upper rim is bent over the lid before firing. This configuration encloses the lid securely and prevents separation under internal pressure after firing.

Document WO2011053405A2 discloses a process is provided for producing an alcoholic beverage for human consumption (e.g., whiskey). In this process, distillate is placed into a container whereat it is in contact with a wood (e.g., oak) surface area and wherein temperature and/or pressure conditions are controllable. The container's conditions are then controllably varied, at a relatively high frequency, to accelerate the aging process.

CN203294474U discloses a wine barrel with a ceramic inner container. The wine barrel with the ceramic inner container comprises a barrel body and the ceramic inner container, the barrel body is provided with an outer shell and an elastic supporting layer, the outer shell is located on the outer portion of the elastic supporting layer, and protective function to the elastic supporting layer is achieved, so that the appearance of the wine barrel is formed. An elastic supporting body covers the ceramic inner container and the wine barrel has strength due to the certain tenacity of the ceramic inner container, the buffering of the elastic supporting body and the protection of the outer shell, so that the wine barrel can bear certain impact force, and therefore the strength and the vibration resistance of the wine barrel are greatly improved.

Document US2043183 discloses a double-walled vessel for transporting and storing beverages, comprising a removable inner container supported within an outer vessel by a cylindrical wall and resilient elements. The arrangement protects the inner vessel from shocks and provides effective insulation through material placed between the walls.

WO2007024987 discloses containment packages having utility for transport of hazardous gases and security systems for controlling access to packages, e.g., hazardous gas containment packages. In a specific implementation, a containment package includes an overpack for improving the safety and security of gas-containment vessels during transportation, e.g., air shipment, in which the overpack is pressurized by a protective gas at pressure in excess of the pressure in the gas-containment vessels, and a global positioning system (GPS) coordinated programmable lock and key system is integrated with the containment package for controlled access to the gas- containment vessels only when the GPS component indicates that the containment package is at a specific geographic location.

Document CN2897831Y discloses an anti-fake liquor barrel, comprising a barrel body, the barrel body comprises a barrel body sidewall and a barrel cover. A slide cover is arranged on the barrel body sidewall or the barrel cover, the slide cover is embedded in the barrel body sidewall or the barrel cover through the slide groove, a built-in opening is arranged on the barrel body sidewall of the inside end of the slide cover, the opening has a inside cover, corresponding holes are on the slide cover and the barrel body respectively, a wire runs through the holes and the holes are sealed with lead. The barrel body is composed of an inner layer of the barrel made of glass or a ceramic and an outer layer of the barrel made of wood, the slide cover is arranged in the outer barrel body, and the opening is positioned in the inner layer of barrel. The inside cover can be the wooden lid, an elastic sleeve is arranged on the wooden lid and the opening. A one-time rotating cover can be arranged. The anti-fake liquor barrel is simple in structure, and can prevent pollutant from entering liquor barrels, thereby ensuring stability in wine quality, nonvolatile and anti-counterfeiting capabilities.

A bung for barrels is disclosed in US578232, comprising a body with pivoted locking dogs actuated by a driven plug. The plug secures the bung tightly in the bung hole and can be partially inserted to provide venting, or fully inserted to seal the barrel, allowing both sealing and controlled air admission.

NL7812594A discloses a beer barrel which is cylindrical in form, with two spherical ends which fit into the limitation of the end edge of the barrel body. Each end wall has a central aperture in which a check valve is fitted. In the usage position, where the barrel is placed on an end edge of its cover, the aperture in the end wall which is uppermost is connected to a carbonic acid gas supply whilst that in the lower end wall is connected to the supply line. In each of the end wall holes a threaded bush is inserted, and around each hole is a protective collar.

WO2007111380A1 discloses a method for producing sintered body and a sintered body. A first inorganic powder molded body and a second inorganic powder molded body are obtained. Each of the bodies contains an inorganic powder, an organic dispersion medium having a reactive functional group and a gelling agent and is solidified by chemical reaction of the organic dispersion medium and the gelling agent. Slurry containing a powder component and an organic dispersion medium is applied to a joint surface of the first inorganic powder molded body 1A. The inorganic powder molded bodies and are allowed to abut on each other while interposing the slurry therebetween and integrated together into a joined body. A sintered body is obtained by sintering the joined body.

Italian patent IT 102013902217828 discloses a container for alcoholic beverages made of ceramic material with controlled porosity and low water absorption, enabling reduced permeability while allowing limited gas exchange. The container has a rounded body with an upper opening closed by a smooth lid resting on a flange, where sealing is achieved by adhesion forces and atmospheric pressure.

A barrel in accordance with the preamble of claim 1 is furthermore known from XP055956215, Clayver: "Clayver CUVES EN CERAMIQUE", 30 July 2016 (2016-07-30), pages 1-8, ,Retrieved on 2022-08-30 from the internet:URL:https:// www.themas-vin.com/contenu/uploads/2016/07/Clayver-brochure-eng_fra.pdf.

It is a first purpose of the present invention implementing a barrel having better or however different properties with regards to the product, in particular to the alcoholic beverage contained therein, such properties allowing the fermentation process or the reactions functional to a better and more natural production to be optimized.

It is a further purpose implementing a barrel having superior characteristics related to the shape and construction, such to improve both the handling of the same and the convenience of use related to the various activities of filling, racking, monitoring the product conditions and also related to the cleaning of the barrel itself, without the need to intervene complexly on the structure and making easily repeatable the access operations.

It is a further purpose implementing a barrel having high wear resistance and high resistance to the modification of the material due to the product contained therein and thus ensuring relatively long duration and stability of the characteristics over time, mostly for what concerns the influence of the material of the barrel on the product.

It is still a further purpose of the present invention providing a modular simplified structure of the barrel making it easier to obtain barrels of different capacity.

It is a further purpose accomplishing a manufacturing process of said barrel that is relatively simple, safe and that allows barrels of different capacity to be made simply and by modifying a minimum number of parts, so as to save production steps and also to reduce to the minimum possible the expenditure in terms of production means linked to a specific embodiment of the barrel .

The invention meets the purpose by a barrel according to the preamble of claim 1, comprising in combination the features of the characterizing part of claim 1. Preferred embodiments are defined by dependent claims 2-13.

According to an embodiment, the barrel is made by a ceramic having controlled porosity with water absorption lower than 10%, in particular lower than 3%.

An embodiment variation provides for the ceramic material belonging to group I or II with reference to the ISO 13006 technical standard, wherein the water absorption capacity is measured according to the ISO 10454-3v technical standard, said groups having the following absorption values E:
- group I: E ≤ 3%;
- group II: 3% 〈 E 〈 10%.

The barrel object of the present invention can preferably be used for the fermentation and preservation of wine and beer but also for the preservation of other alcoholic beverages such as beverages obtained by fermentation, distilled beverages, liquors or the like.

The ceramic material that is used typically has a composition comprising clay, kaolin or a mixture of phyllosilicates providing the plasticity necessary for the shaping. The alkali of the feldspar can provide component needed for the glass melting of a part of the material instead, in order to obtain greification of the same.

Since the barrel according to the present invention must house the alcoholic beverage, such as for example wine, for prolonged periods, for example during the fermentation and aging step, however the material to be used must be able to possibly ensure a certain degree of transpiration. That excludes the chance to use glazed ceramics. Therefore, according to an embodiment, a vitrified ceramic or stoneware having compactness characteristics that are intermediate between terracotta and porcelain, i.e. such a microporosity to possibly allow a controlled gaseous exchange with the environment similarly to the wooden containers, is advantageously used.

The material can advantageously comprise a coarse load of chamotte, such as quartz or aluminum oxide or the same final material, also waste material, milled to coarse shape to supply a skeleton that is rigid enough to contain the possible collapse of the object formed, because of the melting of the feldspar at the firing temperature. Good results have been obtained with load percentages of chamotte not lower than 30%.

According to an embodiment, the material constituting the container comprises 33% kaolin clays, 50% fondants such as feldspar and the remainder 17% inert materials such as sands or quartz.

According to a particularly advantageous embodiment, the material used for the barrel is refractory stoneware or fireclay. This can comprise one or more of the following compounds: SiO2, T1O2, AI2O3, Fe2O3, CaO, MgO, K2O, a20. Particularly advantageous is the use of the following composition: 71.0% S1O2, 1.20% T1O2, 20.5% AI2O3, 0.80% Fe2 03, 0.40% CaO, 1.70% MgO, 3.20% K2 0, 1.00% Na2 0.

Another example of composition that can be used is the following: 48.10% Si02 , 1.80% Ti02, 41.70% AI2O3, 2.20% Fe2 03, 0.65% CaO, 0.90% MgO, 0.71% K2 0, 0.17% Na2 0.

According to a further advantageous characteristic of the barrel according to the present invention, the fore front side has at least one part which is substantially perpendicular to the horizontal axis and has an inlet with a port having size equal to or greater than the average width of a human hand, to which opening a removable lid can be sealingly fixed for the sealed closing and for the inlet giving access inside said barrel .

Typically, this front opening is provided at a certain height above the lower side supporting the barrel on the ground or above a supporting structure, i.e. from the lowest point of the mantle surface.

The opening can have any shape and at least one diameter ranging from 50% to 5% of the maximum diameter of the barrel.

In a preferred embodiment a diameter of said opening may have lengths ranging from about 40% to 20% of the maximum diameter of the barrel, preferably of about 30% of said maximum diameter.

The maximum diameter and the axial length of the barrel are commensurate in such a way that the depth of the barrel in the direction of the horizontal axis allows manually reaching any point of the internal wall of the same from said opening.

The edge of the opening has or forms a contact flange of a lid element.

The surface of this flange is rectified and polished so as to eliminate porosity or roughness and sealingly adhere to the lid, in particular and advantageously to a gasket interposed between said lid and said flange of the opening edge.

Preferably the shape of the opening is circular.

Still according to a further characteristic the edge of said opening, i.e. the contact flange of the lid extends on a plane transversal to said horizontal axis.

Still according to an advantageous characteristic, said opening is coaxial to the central horizontal axis of the barrel.

Still according to a further characteristic, the lid is provided with an outer closing element overlapping said opening and which peripheral, perimeter band overlaps a facing contact surface of said annular edge of said opening, preferably by interposition of at least one sealing gasket, tightening elements being provided to tight the outer element of the lid, which consist of adjustable tightening elements of the edge surrounding the opening between said outer lid element and at least one pair of fins that are diametrically opposed to said outer element, which fins overlap the inner side of said annular edge and/or said front wall surrounding said annular edge.

Still according to a characteristic, the outer closing element has at least one or more communication openings each of which is provided with sealed coupling terminals alternate with an element closing said opening, which is removable, or with an operating member.

It is possible to provide any type of operating member functional to activities related to the product or operations related to the barrel itself.

An exemplary but not exhaustive list comprises one or more of the following elements: a valve, a tap, a temperature sensor and/or a sensor of one or more chemical and/or physical and/or biological parameters of the barrel content.

According to a further embodiment, the barrel can be provided with further openings, such as a filling hole at the mantle wall and to which hole a removable, closing bung can be associated.

A further embodiment variation can alternately or in combination provide a second opening on the back side analogous to that on the fore front side and to which opening on the back side a sealed, removable lid analogous to that provided for the opening on the fore front side is combined.

The barrel can consist of two end sectors of which one on the front and one on the back having a concave, cup shape, which two sectors are opposing to each other, with the open sides facing to each other and which two end sectors are directly connected one another as a single piece or alternatively are connected to one another by an intermediate joining sector tubular or annular and connected as a single piece to the two end sectors .

Preferably the barrel has rotational symmetry with reference to a horizontal axis.

The two, front and rear end sectors consisting of semi -spherical shells, preferably having identical radius and directly connected to each other or connected by one or more cylindrical or annular intermediate elements having pre-established axial length, which are arranged coaxially to the central axes of the two semi -spherical end sectors and which central axes are parallel or coaxial to the horizontal axis of the barrel. The two end sectors are connected to each other by an intermediate element or having a shape of a double opposing cone, whose short base is facing towards a corresponding semi -spherical sector, whereas the two cones are connected to each other at a common long base.

An embodiment still provides for the opening on the fore front side and/or the opening on the back side being oriented in such a way that the peripheral edge bounding the same is perpendicular to the horizontal axis of the barrel.

As it will appear from the following description, the barrel according to the present invention is adapted to be used in cellars and to be provided in combination with at least one, preferably several barrels which can be housed in a supporting structure provided for the barrels on at least one or more planes placed side by side on each plane, the longitudinal, horizontal axes of the same barrels being parallel to each other, whereas the supporting structure optionally has pairs of supporting wheels of the front and rear sectors of the barrel, the supporting wheels of each pair being spaced so as to lean against a circumference of the corresponding sector, in angular positions spaced apart from each other of said circumference.

Advantageously as it will appear below, the barrel has a symmetry plane corresponding to the median plane perpendicular to the horizontal axis of the same.

Object of the disclosure, which does not form part of the invention, is also a manufacturing process that, in its most essential form, provides the steps of
making two bowl- or cup-like shells;
arranging the two shells with the open sides opposing each other and, directly or by interposing an intermediate connecting element, sealingly joining the two shells along the edges of the facing open sides.

When the process is applied to a barrel made of ceramic according to one or more of the characteristics previously described in any combination or sub combination, the process provides the following steps: forming a first semi-shell from a slurry of ceramic material, in a mold having pre-established shape ;
forming a second semi-shell from a slurry of ceramic material in a mold having pre-established shape;
alternately
overturning one of the two semi-shells to an inverted position relative to the other and directly connecting the two semi-shells to each other;
or else making an intermediate element extending one of the two semi-shells at said edge of the open side of the same along a direction substantially parallel to the central axis of said semi-shell, the intermediate element having a pre-established length parallel to said axis;
overturning the other of the two semi-shells to an inverted position relative to the semi-shell provided with the intermediate element and connecting said overturned semi-shell with its edge of the open side to the facing edge of the intermediate element; sealing the connection areas of the two semi- shells to each other or to the intermediate element; drying the container;
furnace firing the container;
removing the material for making a hole in the area of the mantle wall and of an opening next to at least the fore front side of the container;
placing the container with the axis in a horizontal position.

In a process for storing, preserving and/or treating liquids during the fermentation process and/or after the fermentation process, i.e. for producing, storing and/or treating wine, tanks or barrels are used which are made of ceramic according to one or more of the characteristics described above in any combination or sub-combination.

These and other characteristics and advantages of the present invention will be more evident from the following description of some exemplary embodiments depicted in the attached drawings wherein:
Figs. 1, 2 and 3 depict an embodiment of the barrel according to the present invention in a perspective view, a view on the fore front side in the direction of the horizontal axis O and a lateral view, respectively.
Figure 4 is sectional view of the barrel according to the preceding figures along a diametrical plane containing the central horizontal axis of the barrel.

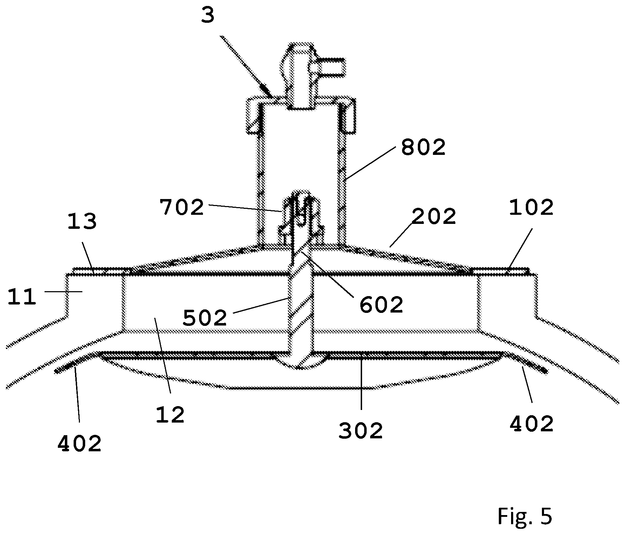

Figure 5 is an inverted and enlarged view of the detail of figure 4 related to the lid assembled on the barrel.
Figure 6 is sectional view analogous to that of figure 5, depicting the lid separated from the barrel.

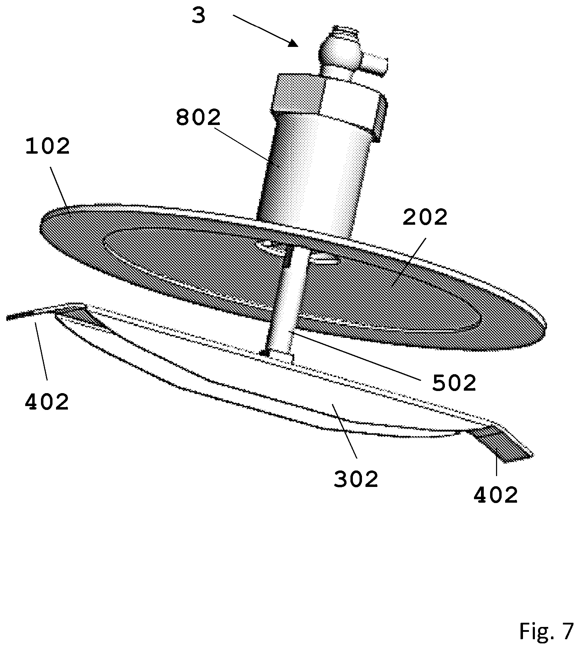

Figure 7 is a perspective view of the lid according to the preceding figures.
Figure 8 depicts a combination of barrels according to the preceding figures, which are housed in a supporting structure.
Figure 9 schematically depicts the essential steps of the manufacturing process of the barrels according to the present invention.

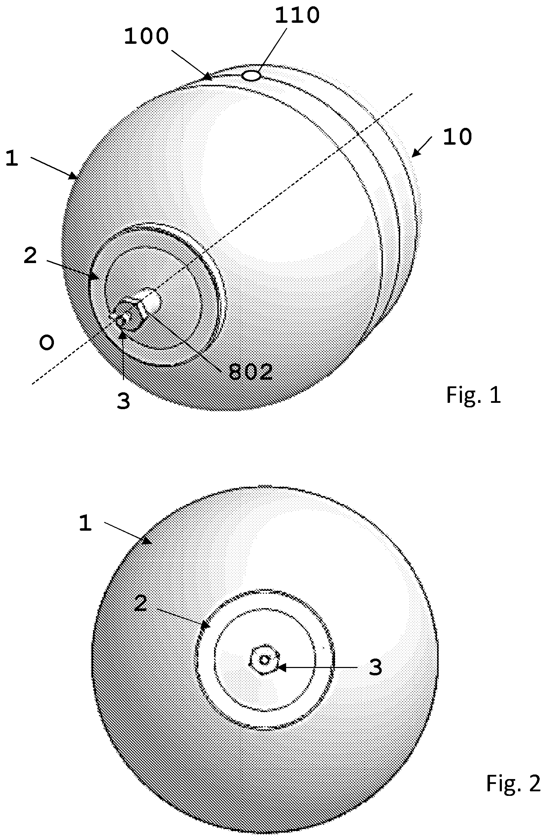

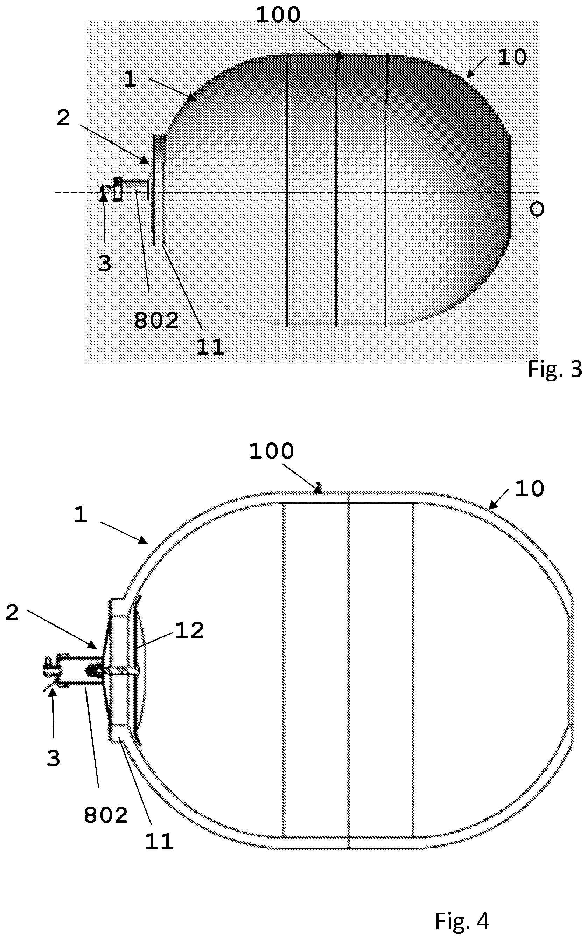

With reference to figures 1 to 3, an embodiment of a barrel according to the present invention provides for said barrel being formed by two end sectors 1, 10 that are arranged at the opposite ends of the barrel and connected to each other by a substantially cylindrical intermediate sector 100.

Any shape is possible for the two sectors 1, 10 and the intermediate sector 100, as only the front and rear sectors 1, 10 must have an edge at the open side which is fitting and congruent with the facing contact edge of the intermediate sector.

The depicted preferred embodiment provides for the barrel having rotational symmetry with respect to the horizontal axis "O" (fig. 1). This arrangement, while being the preferred embodiment for the advantages that involves, as it will appear more clearly below, must not be interpreted as a limitation of the inventive concepts also expressed in the introductory part of the present invention and in the claims.

The two end sectors 1, 10 have a substantially spheroidal shape, preferably regular semi -spherical shape, which semi -spherical shape is coaxial to the horizontal axis of the barrel.

The depicted intermediate sector 100 has a cylindrical shape coaxial to the horizontal axis and to the two semi -spherical end sectors 1, 10.

The intermediate sector can have different axial lengths and can be made in a single piece or more than one annular element having pre-established axial dimensions, whereby the combination of a certain number of rings allows making intermediate sectors 100 having different axial length depending on the capacity of the barrel.

Contrary to what is depicted and as it will appear clearer below regarding the description of the process, in an example which does not form part of the invention, the intermediate sector 100 can also be missing as the two semi-spherical front and rear sectors 1 and 10 are directly connected to each other to configure a barrel having a minimal capacity.

At the intermediate sector 100 there is a hole 110 for filling/emptying the barrel. A closing bung can be removably engaged in said hole for temporarily closing it.

The two front and rear sectors are substantially identical to each other and have median smoothing according to a plane secant or tangential to the spherical shape and perpendicular to the horizontal axis.

When a perfect rotational symmetry related to the horizontal axis is not required, the smoothing plane of the front and rear sector 1, 10 can also not be perfectly perpendicular to the horizontal axis "O".

The smoothing of the front sector forms an annular, circular edge 11 bounding an opening 12. The lower area of the annular edge 11 is provided at a higher level with respect to the lower area of the mantle wall.

Such an opening 12 advantageously has a diameter such that it is possible to access inside the barrel with one hand and/or preferably with the arm.

The opening can have a diameter ranging from 50% to 5% of the maximum diameter of the barrel.

A preferred embodiment provides for the diameter of said opening possibly having lengths between about 40% and 20% of the maximum diameter of the barrel, preferably about 30% of said maximum diameter.

The maximum diameter and the axial length of the barrel are commensurate in such a way that the depth of the barrel in the direction of the horizontal axis allows manually reaching any point of the internal wall of the same from said opening.

The annular bounding edge 11 of the opening forms, on its outer head side, a flange 13 which is appropriately rectified, polished, and/or suitably superficially treated to ensure a perfect sealing to an annular gasket (not depicted) which is intended to be interposed between said flange 13 and an annular peripheral flange 102 of a closing lid 2.

Said flange of the lid has shape and dimensions congruent or substantially congruent with the flange 13 of the edge 11 of the opening 12.

The lid has an outer closing element 202 like a disk peripherally ending with said flange 102.

The outer element of the lid 202 provides means tightening to the flange 13 of the edge 11 of the opening 12 which, in the exemplary embodiment, preferably consist, but are not limited to, a crosspiece 302 connected to the lid element 202 so as to get a diametrical position with respect to said closing element 202 and the opening 12. The diametrical crosspiece 302 has end fins 402 radially extending so as to exceed the diameter of the opening 12 , which are intended to overlap posteriorly to the inner edge of the annular edge 11 of the opening 12 and which can also extend up to reach at least the part of the wall of the front sector 1 surrounding said edge 11. Said crosspiece 302 is coaxial to the lid and is retained by the same thanks to a central pin 502 coaxial to the axis of the lid 2, i.e. of the closing element 202 and the crosspiece 302, which has a threaded terminal 602. The threaded terminal 602 is engaged in a nut thread 702 integral to the closing element 202 and provided in the center of the same. The end of the threaded terminal 602 protrudes beyond the nut thread 702 on the outer side of the lid 2 and is provided with grasping means or a grasping shaping for a conventional tool, like a wrench, a pipe wrench, a screwdriver, a pair of pliers or the like.

The threaded pin is freely and rotatably engaged in a central through hole of the crosspiece 302 and remains engaged with the same thanks to an enlarged head abutting against the crosspiece on the side of the same opposite to the closing element 202.

With the purpose of ensuring the sealing of the lid, also in the presence of the opening needed for the passage of the threaded pin, coaxially to the nut thread, the closing element 202 has a sleeve 802 surrounding said nut and ending with a sealingly joining end of a bung or other closing member.

Advantageously, the sleeve 802 has such a diameter to act simultaneously also as an orifice communicating with the interior of the barrel, at least one opening 902 in the wall of the closing element in an intermediate position between the nut and the internal wall of the sleeve 802 being provided.

In the depicted exemplary embodiment, instead of a bung, a drafting tap 3 is sealingly fixed to the end of the sleeve 802.

Thanks to that, the lid also gets the function of an access member to the barrel for drafting liquid samples.

Other terminals can be connected to the sleeve 802, which allow for example probes or sensors to be sealingly inserted to evaluate the process parameters and/or the product conditions in the barrel.

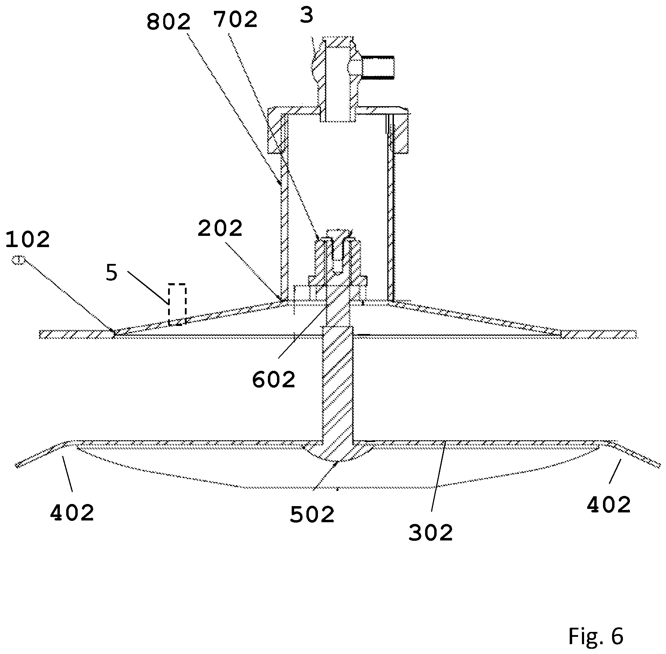

In figure 6 a further passage path made in the lid 2 and in particular in the closing element 202, for sealingly inserting in the barrel possible further sensors or functional members, is schematically denoted by 5. Such sealed passages are known to the skilled in the art, who thus can select among known arrangements from his basic cultural baggage.

Also relating to the structure of the lid, different alternative solutions are possible. For example instead of a unique diametrical crosspiece it is possible to provide two diametrical crosspieces crossing each other or else, along the periphery of the lid, it is possible to provide a crown of overlapping fins posteriorly to the edge 11 of the opening 12, which are each tightened thanks to screw means, the sealing of the closing element 202 being fixed by gaskets interposed between the screw heads and the outer surface of the closing element 202 around the corresponding hole for the passage of the screw.

In the depicted exemplary embodiment, the secant smoothing of the rear sector denoted by 21 forms a back side of the barrel that is parallel and opposed to the opening 12. However according to a not depicted embodiment variation, also the rear end sector 10 of the barrel can be made with an opening and substantially identical to the front sector 1 and a sealing lid analogous or similar to that provided and described can be combined thereto, in order to seal the opening 12 on the front end 1 of the barrel.

An embodiment according to the invention provides that instead of an intermediate sector 100 made by a cylindrical element or one or more annular elements as in the depicted preferred embodiment, the intermediate sector is made by two concentric conical elements connected to each other at the edge bounding the long base, whereas the edges of the two cones bounding the short base are each connected to the edge of the open side of one of the two end sectors 1, 10.

Still according to a further alternative, each of the two truncated-cone elements is made as an axial extension, in a single piece, of the edge of the front and rear end semi-spherical sectors.

Still according to further variation, the two truncated-cone sectors opposing to each other described above can be connected to each other by an intermediate annular element, for example a cylindrical one.

Still according to a not depicted characteristic, the intermediate sector can have an outer diameter slightly bigger than the two end sectors 1, 10, thus forming a joining area with said end sectors 1, 10 having an outer radial step and a substantially cylindrical band with increased thickness and thus greater toughness, for example for rolling the barrel on the ground .

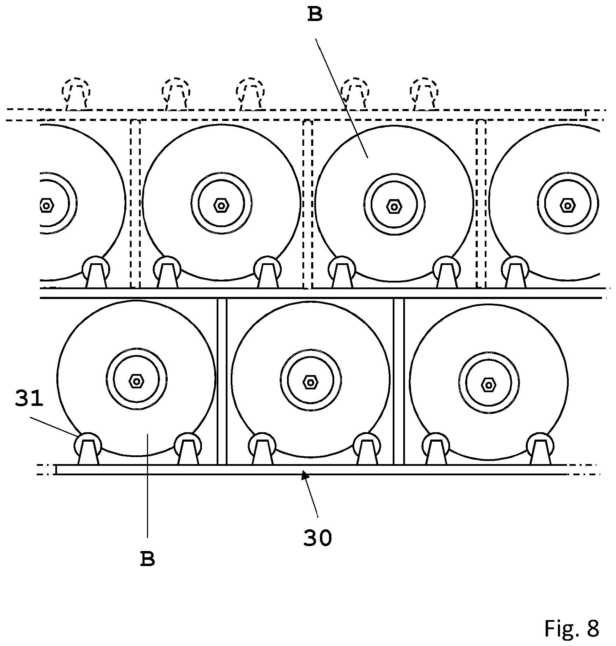

Figure 8 depicts the use of the barrel according to the present invention in a plant for storing liquid products such as beverages or the like, i.e. wines, liquors or the like.

A supporting structure denoted by 30 has more than one overlapping plane, each for a row of barrels placed side by side with their horizontal axes substantially parallel to each other. Each barrel B rests on two pairs of wheels 31. The wheels 31 are coincident with a circumference of the end sectors, therefore the barrel B remains centered in the direction of the horizontal axis and can rotate around the same, thanks to its rotationally symmetrical construction.

The barrel according to the present invention can be made by a greified ceramic material of any type.

The stoneware is obtained for natural clay mixtures containing quartz-feldspathic rocks inducing the vitrification or greification of the mass. A load of chamotte, typically made of quartz or aluminum oxide, provides a skeleton that is rigid enough to contain the possible collapse of the object formed because of the melting of the feldspar at the firing temperature. On the other hand, the chamotte affects the densification of the mass and, thus, the porosity of the same. Therefore, by acting on the percentage of chamotte, it is possible to control both the water absorption capacity of the material and its toughness.

The ISO 10454-3 technical standard provides for a standard to measure the absorption capacity E, based on which it is possible to classify the ceramics in three groups according to ISO 13006 technical standard:
- group I: E ≤ 3%;
- group II: 3% 〈 E 〈 10%;
- group III: E 〉 10%.

The best results can be obtained with ceramics belonging to the first two groups, with a preference for group I. In principle there is no lower limit to be respected even though absorptions between 0.5% and 6% are preferred, i.e. ceramics belonging to the subgroups Bib and Alia.

The inventors could verify how the refractory stoneware or fireclay has the best porosity/toughness characteristics for making containers for oenological use also having large dimensions.

The fireclay is an aggregate mineral constituted by aluminum hydro silicates with or without free silica. Its typical chemical composition comprises S1O2, T1O2, AI2O3, Fe2O3, CaO, MgO, K2O, a20 in various percentages. For example, it is possible to provide 45% to 80%, preferably 71.0% S1O2, 1% to 5%, preferably 1.20% Ti02, 20% to 50%, preferably 20.5% AI2O3, 0.4% to 3%, preferably 0.80% Fe2 03, 0.2% to 2%, preferably 0.40% CaO, 0.50% to 3%, preferably 1.70% MgO, 0.50% to 5%, preferably 3.20% K2 0, 0.05% to 3%, preferably 1.00% Na2 0.

As described above an example of a usable composition can be the following: 48.10% S1O2, 1.80% T1O2, 41.70% AI2O3, 2.20% Fe2 03, 0.65% CaO, 0.90% MgO, 0.71% K2 0, 0.17% Na2 0.

In order to have a right balance between toughness and porosity, the load of chamotte is preferably coarse and not lower than 30%.

According to an example, the techniques of manufacturing big hollow components, as in the case of the described container, comprise:
- lathe modeling;
- coil modeling;
- manual-tracing modeling on plaster molds with possible finishing with modine or rocking bar;
- molding two valves by a press on plaster molds and directly manual welding the two halves one to the other or to an intermediate sector;
- molding by an undercut press;
- slip casting in plaster molds or porous resin molds. More in general, any type of technique used for modeling the terracotta can be used for making containers according to the present invention.

According to an advantageous embodiment, the two semi-shells forming the front end and the rear end sectors 1, 10 of the barrel and the intermediate sector, are made by using suitable molds.

For the two end sectors an identical mold can be used and it is also possible to use a mold only for the step-by-step production of the two semi-shells.

Once the not yet dried and/or fired ceramic material has been modeled so as to take the shape of one of the two semi-shells forming the end sector, the intermediate sector is fixed to the same.

Different alternatives are possible for making the intermediate sector. A first alternative provides the intermediate sector being made separately and then coupled to one of the two semi-shells; a second alternative provides for said intermediate sector being directly built on the semi-shell formed by one of the two end sectors.

In both cases, it is advantageous that in this step the semi-shell forming the end sector is oriented with its axis that is the horizontal axis of the finished barrel in vertical direction, whereby the edge of said semi-shell, to which the intermediate sector has to be coupled, extends in an horizontal plane and the intermediate sector can be leaned or directly built thanks to a mold on the edge of the semi-shell.

The second semi-shell, constituting the further end sector on the opposite side of the barrel, is thus itself formed by a mold and thus it is overturned with the edge contacting the intermediate sector facing downwards. Thanks to that, said second semi-shell is simply leaned to the upper edge of the intermediate sector.

The connection areas are made solid, i.e. "welded" one to the other according to techniques that are usual techniques in the field of ceramic products, so that after the drying step and the firing step the end sectors and the intermediate sector, when present, form a unique piece.

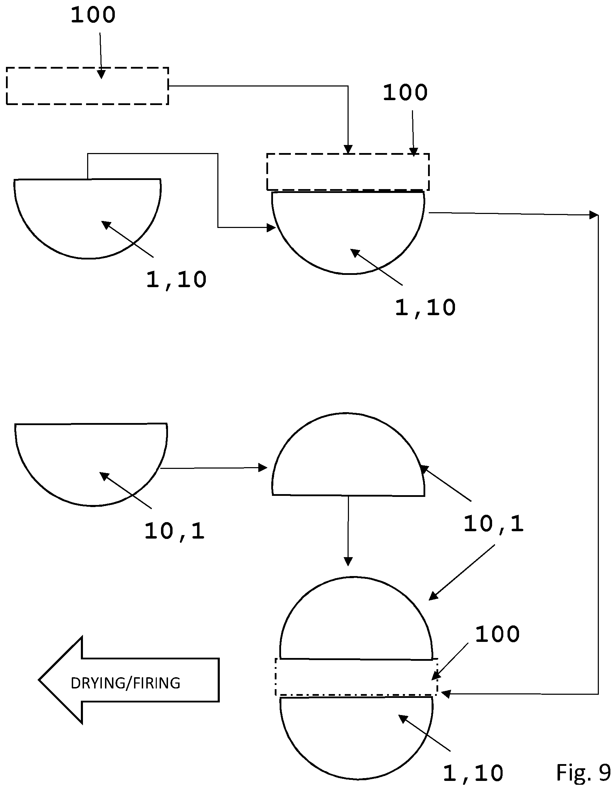

Figure 9 schematically depicts the steps of the manufacturing process in a very essential way.

A semi-shell corresponding to one of the two end sectors 1 or 10 is made by a mold. A possible element corresponding to the cylindrical sector is also provided. The dashed line represents the fact that this element may not be provided or else that it is possible to provide more than one different element 100 according to what already described for what concerns shape and axial dimensions, in order to be able to easily and economically make barrels having different capacity.

Intermediate sector 100 is leaned on the edge of the semi-shell.

A second semi-shell corresponding to the further end sector is made; this is then turned upside down and lowered on the upper edge of the intermediate sector 100, when provided, or on the edge of the facing semi-shell.

For what concerns the openings, these are made prior to drying and firing by using suitable milling cutters or cutting heads.

## Claims

1. Barrel in particular for alcoholic beverages and especially for fermentation and/or vinification processes, which barrel has a horizontal central longitudinal axis which intersects a front wall and a back wall and a mantle wall closing on itself and extending around said axis, which barrel is made of ceramic, and consists of two semi-spherical end sectors
which two sectors are opposing to each other, with the open sides facing to each other and which two semi-spherical end sectors are connected by an intermediate joining sector and connected as a single piece to the two end sectors,
**characterized in that**
the two semi-spherical end sectors are connected to each other by an intermediate joining sector having a shape of a double opposing cone, whose short bases are facing towards a corresponding semi-sperical sector, whereas the two cones forming the double opposing cone are connected to each other at a common long base.

2. Barrel according to claim 1, **characterized in that** it is made by firing a ceramic material having controlled porosity, having a water absorption capacity lower than 10%, in particular lower than 3%.

3. Barrel according to claim 1 or 2, **characterized in that** the ceramic material belongs to the group I or II with reference to the ISO 13006 technical standard, wherein the water absorption capacity is measured in accordance with the ISO 10545-3 technical standard, said groups having the following absorption values E:
- group I: E ≤ 3%;
- group II: 3% < E ≤ 10%.

4. Barrel according to one or more of the preceding claims, wherein the fore front side has at least one part which is substantially perpendicular to the horizontal axis and has an inlet with a port having size equal to or greater than the average width of a human hand, to which opening a removable lid can be sealingly fixed for the sealed closing and for the inlet giving access inside said barrel.

5. Barrel according to claim 4, wherein said opening is preferably circular and is bounded by an annular edge, the lid being provided with an outer closing element overlapping said opening and which peripheral, perimeter band overlaps a facing contact surface of said annular edge of said opening, preferably by interposition of at least one sealing gasket, tightening elements being provided to tight the outer element of the lid, which consist of adjustable tightening elements of the edge between said outer element and at least one pair of fins that are diametrically opposed to said outer element, which fins overlap the inner side of said annular edge and/or said front wall surrounding said annular edge.

6. Barrel according to one or more of the preceding claims, wherein the outer closing element has at least one or more communication openings each of which is provided with sealed coupling terminals alternate with an element closing said opening, which is removable, or with an operating member.

7. Barrel according to claim 6, **characterized in that** said operating member is selected among one or more of the following operating members: a valve, a tap, a temperature sensor and/or a sensor of one or more chemical and/or physical and/or biological parameters of the barrel content.

8. Barrel according to one or more of the preceding claims, **characterized in that** it comprises an opening also on the back side of the same, optionally in a symmetrical position with respect to the opening on the front side and to the median plane perpendicular to the longitudinal axis of the same, which opening can be opened and closed by a removable lid having one or more of the characteristics of claims 4 to 7.

9. Barrel according to one or more of the preceding claims **characterized in that** it has a rotational symmetry with reference to a horizontal axis.

10. Barrel according to one or more of the preceding claims, wherein the two, front and rear end sectors consist of semi-spherical shells, preferably having identical radius and directly connected to each other or connected by one or more cylindrical or annular intermediate elements having pre-established axial length, which are arranged coaxially to the central axes of the two semi-spherical end sectors.

11. Barrel according to one or more of the preceding claims, **characterized in that** the opening on the fore front side and/or the opening on the back side are oriented in such a way that the peripheral edge bounding the same is perpendicular to the horizontal axis of the barrel.

12. Barrel according to one or more of the preceding claims, **characterized in that** the mantle wall has a filling hole provided with a sealing bung.

13. Barrel according to one or more of the preceding claims, **characterized in that** it is provided in combination with at least one further barrel and a supporting structure of the barrels on at least one or more planes placed side by side on each plane, the longitudinal, horizontal axes of the same barrels being parallel to each other, whereas the supporting structure optionally has pairs of supporting wheels of the front and rear sectors of the barrel, the supporting wheels of each pair being spaced so as to lean against a circumference of the corresponding sector, in angular positions spaced apart from each other of said circumference.

## Patentansprüche

1. Fass, insbesondere für alkoholische Getränke und insbesondere für Gärungs- und/oder Weinbereitungsverfahren, wobei das Fass eine horizontale eine Vorderwand und eine Rückwand schneidende zentrale Längsachse und eine sich in sich geschlossene, sich um die Achse herum erstreckende Mantelwand aufweist, wobei das Fass aus Keramik gefertigt ist und aus zwei halbkugelförmigen Endsektoren besteht,
wobei die beiden Sektoren einander gegenüberliegen, wobei deren offene Seiten einander zugewandt sind, und wobei die beiden halbkugelförmigen Endsektoren durch einen Zwischenfügesektor miteinander verbunden sind und dieser einstückig mit den beiden Endsektoren verbunden ist,
**dadurch gekennzeichnet, dass**
die beiden halbkugelförmigen Endsektoren durch einen Zwischenfügesektor miteinander verbunden sind, der die Form eines gegenüberliegenden Doppelkegels aufweist, dessen kurze Basen jeweils einem entsprechenden halbkugelförmigen Sektor zugewandt sind, während die beiden den gegenüberliegenden Doppelkegel bildenden Kegel an einer gemeinsamen langen Basis miteinander verbunden sind.

2. Fass nach Anspruch 1, **dadurch gekennzeichnet, dass** es durch Brennen eines keramischen Materials mit kontrollierter Porosität hergestellt ist, das eine Wasseraufnahmefähigkeit unter 10 %, insbesondere unter 3 % aufweist.

3. Fass nach Anspruch 1 oder 2, **dadurch gekennzeichnet, dass** das keramische Material gemäß der technischen Norm ISO 13006 zur Gruppe I oder II gehört, wobei die Wasseraufnahmefähigkeit gemäß der technischen Norm ISO 10545-3 gemessen wird und die besagten Gruppen die folgenden Absorptionswerte E aufweisen:
- Gruppe I: E ≤ 3%;
- Gruppe II: 3% < E ≤ 10%.

4. Fass nach einem oder mehreren der vorstehenden Ansprüche, wobei die Stirnvorderseite wenigstens einen Abschnitt aufweist, der im Wesentlichen senkrecht zur horizontalen Achse liegt und eine Einlassöffnung mit einer Lichtweite aufweist, deren Größe gleich oder größer als die durchschnittliche Breite einer menschlichen Hand ist, wobei an dieser Öffnung ein abnehmbarer Deckel dichtend fixierbar ist, der für das dichte Verschließen sowie das Öffnen des Zugangs zum Inneren des Fasses vorgesehen ist.

5. Fass nach Anspruch 4, wobei die Öffnung vorzugsweise kreisförmig und von einem ringförmigen Rand begrenzt ist, wobei der Deckel mit einem äußeren Verschlusselement versehen ist, das die Öffnung überlappt und dessen peripherer Umfangsband eine gegenüberliegende Kontaktfläche des ringförmigen Randes der Öffnung überlappt, vorzugsweise durch Zwischenschaltung mindestens einer Dichtung, wobei Spannelemente zum Spannen des äußeren Elements des Deckels vorgesehen sind, die aus einstellbaren Spannelementen des Randes zwischen dem äußeren Element und mindestens einem Paar von Flügeln bestehen, die dem äußeren Element diametral gegenüberliegen, wobei die Flügel die Innenseite des ringförmigen Randes und/oder die den ringförmigen Rand umgebende Stirnwand überlappen.

6. Gehäuse gemäß einem oder mehreren der vorstehenden Ansprüche, wobei das äußere Verschlusselement zumindest eine oder mehrere Kommunikationsöffnungen aufweist, von denen jede mit Anschlüssen zum Dichtverschließen der Öffnung abwechselnd mit einem Element, das die Öffnung verschließt und abnehmbar ist, oder mit einem Betätigungselement versehen ist.

7. Fass nach Anspruch 6, **dadurch gekennzeichnet, dass** das Betätigungselement aus einem oder mehreren der folgenden Betätigungselemente ausgewählt ist: einem Ventil, einem Hahn, einem Temperatursensor und/oder einem Sensor für einen oder mehrere chemische und/oder physikalische und/oder biologische Parameter des Fassinhalts.

8. Fass nach einem oder mehreren der vorstehenden Ansprüche, **dadurch gekennzeichnet, dass** es auch auf seiner Rückseite eine Öffnung aufweist, die optional in einer symmetrischen Position in Bezug auf die Öffnung auf der Stirnseite und in Bezug auf die zur Längsachse desselben senkrechte Mittelebene angeordnet ist, wobei die Öffnung durch einen abnehmbaren Deckel geöffnet und geschlossen werden kann, der eines oder mehrere der Merkmale gemäß den Ansprüchen 4 bis 7 aufweist.

9. Fass nach einem oder mehreren der vorstehenden Ansprüche, **dadurch gekennzeichnet, dass** es eine Rotationssymmetrie bezüglich einer horizontalen Achse aufweist.

10. Fass nach einem oder mehreren der vorstehenden Ansprüche, wobei die beiden Vorder- und Hinterendsektoren aus halbkugelförmigen Schalen bestehen, die vorzugsweise denselben Radius aufweisen und entweder direkt miteinander verbunden sind oder durch ein oder mehrere zylindrische oder ringförmige Zwischenelemente mit vorgegebener axialer Länge verbunden sind, die koaxial zu den Mittelachsen der beiden halbkugelförmigen Endsektoren angeordnet sind.

11. Fass nach einem oder mehreren der vorstehenden Ansprüche, **dadurch gekennzeichnet, dass** die Öffnung an der Stirnvorderseite und/oder die Öffnung an der Rückseite so ausgerichtet sind, dass der diese begrenzende periphere Rand senkrecht zur horizontalen Achse des Fasses steht.

12. Fass nach einem oder mehreren der vorstehenden Ansprüche, **dadurch gekennzeichnet, dass** die Mantelwand eine mit einem Dichtungsstopfen versehene Einfüllöffnung aufweist.

13. Fass nach einem oder mehreren der vorstehenden Ansprüche, **dadurch gekennzeichnet, dass** es in Kombination mit mindestens einem weiteren Fass und einer Tragkonstruktion zum Halten der Fässer auf mindestens einer oder mehreren Ebenen sowie nebeneinander auf jeder Ebene, wobei die Längs- und horizontalen Achsen derselben Fässer parallel zueinander verlaufen, wobei die Tragkonstruktion optional mit Paaren von Tragrollen für den vorderen und hinteren Sektor des Fasses versehen ist, wobei die Tragrollen jedes Paares so beabstandet sind, dass sie an einem Umfang des entsprechenden Sektors in voneinander beabstandeten Winkelpositionen dieses Umfangs anliegen.

## Revendications

1. Fût en particulier pour boissons alcoolisées et notamment pour des processus de fermentation et/ou de vinification, lequel fût présente un axe longitudinal central horizontal qui coupe une paroi avant et une paroi arrière, ainsi qu'une paroi d'enveloppe se refermant sur elle-même et s'étendant autour dudit axe, lequel fût est réalisé en céramique et se compose de deux secteurs d'extrémité hémisphériques
lesquels deux secteurs sont opposés l'un à l'autre, avec les côtés ouverts se faisant face, et lesquels deux secteurs d'extrémité hémisphériques sont reliés par un secteur de jonction intermédiaire et reliés d'une seule pièce aux deux secteurs d'extrémité,
**caractérisé en ce que**
les deux secteurs d'extrémité hémisphériques sont reliés l'un à l'autre par un secteur de jonction intermédiaire ayant la forme d'un double cône opposé, dont les bases courtes sont tournées vers un secteur hémisphérique correspondant, tandis que les deux cônes formant le double cône opposé sont reliés l'un à l'autre au niveau d'une base longue commune.

2. Fût selon la revendication 1, **caractérisé en ce qu'**il est réalisé par cuisson d'un matériau céramique à porosité contrôlée, présentant une capacité d'absorption d'eau inférieure à 10 %, en particulier inférieure à 3 %.

3. Fût selon la revendication 1 ou 2, **caractérisé en ce que** le matériau céramique appartient au groupe I ou II au sens de la norme technique ISO 13006, où la capacité d'absorption d'eau est mesurée conformément à la norme technique ISO 10545-3, lesdits groupes présentant les valeurs d'absorption E suivantes:
- groupe I: E ≤ 3 %;
- groupe II: 3%< E ≤ 10 %.

4. Fût selon une ou plusieurs des revendications précédentes, où la côté avant frontale présente au moins une partie qui est sensiblement perpendiculaire à l'axe horizontal et présente une entrée avec une lumière dont la taille est égale ou supérieure à la largeur moyenne d'une main humaine, ouverture à laquelle peut être fixé, de manière étanche, un couvercle amovible pour la fermeture étanche et pour permettre l'accès à l'intérieur dudit fût.

5. Fût selon la revendication 4, dans lequel ladite ouverture est de préférence circulaire et est délimitée par un bord annulaire, le couvercle étant muni d'un élément de fermeture extérieur recouvrant ladite ouverture et dont la bande périphérique périmètral recouvre une surface de contact faisant face en regard dudit bord annulaire de ladite ouverture, de préférence par l'interposition d'au moins un joint d'étanchéité, des éléments de serrage étant prévus pour serrer l'élément extérieur du couvercle, lesquels consistent en des éléments de serrage réglables du bord entre ledit élément extérieur et au moins une paire d'ailettes diamétralement opposées audit élément extérieur, lesquelles ailettes recouvrent la côté intérieure dudit bord annulaire et/ou ladite paroi avant entourant ledit bord annulaire.

6. Fût selon une ou plusieurs des revendications précédentes, où l'élément de fermeture extérieur présente au moins une ou plusieurs ouvertures de communication, chacune d'entre elles est pourvue d'extrémités d'accouplement étanches alternées avec un élément de fermeture de ladite ouverture, qui est amovible, ou avec un organe de commande.

7. Fût selon la revendication 6, **caractérisé en ce que** ledit élément de commande est choisi parmi un ou plusieurs des éléments de commande suivants: une vanne, un robinet, un capteur de température et/ou un capteur d'un ou plusieurs paramètres chimiques et/ou physiques et/ou biologiques du contenu du fût.

8. Fût selon l'une ou plusieurs des revendications précédentes, **caractérisé en ce qu'**il comprend également une ouverture sur sa côté arrière, éventuellement dans une position symétrique par rapport à l'ouverture sur la côté avant et au plan médian perpendiculaire à son axe longitudinal, laquelle ouverture peut être ouverte et fermée par un couvercle amovible présentant une ou plusieurs des caractéristiques des revendications 4 à 7.

9. Fût selon une ou plusieurs des revendications précédentes, **caractérisé en ce qu'**il présente une symétrie de rotation par rapport à un axe horizontal.

10. Fût selon une ou plusieurs des revendications précédentes, où les deux secteurs d'extrémité, avant et arrière, sont constitués de coques hémisphériques, présentant de préférence un rayon identique et reliées directement l'une à l'autre ou reliées par un ou plusieurs éléments intermédiaires cylindriques ou annulaires ayant une longueur axiale prédéterminée, qui sont disposés de manière coaxiale par rapport aux axes centraux des deux secteurs d'extrémité hémisphériques.

11. Fût selon une ou plusieurs des revendications précédentes, **caractérisé en ce que** l'ouverture sur la côté frontale avant et/ou l'ouverture sur la côté arrière sont orientées de telle sorte que le bord périphérique qui les délimite soit perpendiculaire à l'axe horizontal du fût.

12. Fût selon une ou plusieurs des revendications précédentes, **caractérisé en ce que** la paroi d'enveloppe présente un orifice de remplissage muni d'un bouchon d'étanchéité.

13. Fût selon une ou plusieurs des revendications précédentes, **caractérisé en ce qu'**il est prévu en combinaison avec au moins un autre fût et avec une structure de support des fûts sur au moins un ou plusieurs plans disposés côte à côte sur chaque plan, les axes longitudinaux et horizontaux de ces mêmes fûts étant parallèles entre eux, tandis que la structure de support présente éventuellement des paires de roues de support des secteurs avant et arrière du fût, les roues de support de chaque paire étant espacées de manière à s'appuyer contre une circonférence du secteur correspondant, dans des positions angulaires espacées les unes des autres sur ladite circonférence.
